Europäisches Patentamt

European Patent Office

Office européen des brevets

(19)

(11) EP 0 765 467 B1

(12) FASCICULE DE BREVET EUROPEEN

(45) Date de publication et mention
de la délivrance du brevet:
**06.08.2003 Bulletin 2003/32**

(21) Numéro de dépôt: **96913573.0**

(22) Date de dépôt: **11.04.1996**

(51) Int Cl.7: **G01L 5/16**

(86) Numéro de dépôt international:
**PCT/FR96/00551**

(87) Numéro de publication internationale:
**WO 96/032626 (17.10.1996 Gazette 1996/46)**

(54) **CAPTEUR DE MESURE D'UN TORSEUR DE LIAISON ENTRE DEUX PIECES MECANIQUES, AINSI QUE SON PROCEDE DE FABRICATION**

WANDLER ZUM MESSEN DER TORSION ZWISCHEN ZWEI GEKOPPELTEN MECHANISCHEN TEILEN UND VERFAHREN ZUR FERTIGUNG DES WANDLERS

SENSOR FOR MEASURING CONNECTING TORQUE BETWEEN TWO MECHANICAL PARTS, AND METHOD FOR MAKING SAME

(84) Etats contractants désignés:
**DE ES GB IT**

(30) Priorité: **12.04.1995 FR 9504412**

(43) Date de publication de la demande:
**02.04.1997 Bulletin 1997/14**

(73) Titulaire: **GIAT INDUSTRIES**
**78000 Versailles (FR)**

(72) Inventeur: **DURAND, Didier**
**. (FR)**

(74) Mandataire: **Célanie, Christian et al**
**Giat Industries SA**
**13, route de la Minière**
**78034 Versailles Cédex (FR)**

(56) Documents cités:
| | |
|---|---|
| **EP-A- 0 083 296** | **EP-A- 0 625 410** |
| **DE-A- 3 019 751** | **DE-A- 4 101 732** |
| **FR-A- 2 529 333** | **US-A- 3 582 691** |

**Description**

La présence invention concerne un capteur de mesure d'un torseur de liaison entre deux pièces mécaniques.

Le capteur envisage par l'invention est destiné à permettre la mesure d'un torseur de force complet, à savoir : trois composantes de force et trois composantes de moment exercées entre deux pièces mécaniques.

Un capteur de mesure d'un torseur de force complet est notamment décrit dans le document EP-A-0 396 568. Ce capteur est constitué d'une seule pièce métallique qui présente deux faces d'extrémité et une partie centrale. Les deux faces d'extrémité sont destinées à être respectivement fixées sur un corps de référence et sur un corps engendrant des forces et des moments. La partie centrale est constituée de six poutres présentant longitudinalement une forme en hélice. Les six poutres sont disposées suivant une architecture triangulée fermée entre les deux faces d'extrémité. Chaque poutre supporte des moyens de mesure des déformations, ces moyens étant constitués par des jauges de contrainte.

Un tel capteur de mesure se caractérise notamment par une raideur relativement faible en raison même du principe de mesure qui est basé sur l'utilisation de jauges de contrainte. En effet, le bon fonctionnement d'une jauge de contrainte impose une certaine élasticité du métal formant la partie centrale du capteur.

Il en résulte des inconvénients parmi lesquels:

- une bande passante limitée par la fréquence propre du capteur et par l'élasticité supplémentaire introduite pour l'utilisation des jauges de contrainte, et
- un déplacement suivant six degrés de liberté ou compliance qui peut être incompatible avec certaines utilisations,

En outre, la mise en place des jauges de contrainte sur les poutres nécessite une certaine surface pour permettre le collage et le câblage, ce qui limite la taille minimale de ces capteurs.

Enfin, toujours en raison de la technologie des jauges de contrainte, ces capteurs ont des coefficients de sécurité à la rupture qui sont inférieurs à 5, ce qui peut être très insuffisant dans certains cas, la robotique par exemple, ou bien nécessiter l'utilisation de capteurs surdimensionnés avec la perte de sensibilité que cela implique.

Le document DE-A-3 019 751 décrit l'utilisation de capteurs piézoélectriques à trois composantes de force dans des machines-outils. Pour cela, on dispose un certain nombres d'éléments piézoélectriques entre une plaque de base de la machine et une plaque porteuse d'outils, toutes deux rotatives autour d'un axe. Chaque capteur est fixé de manière rigide par un boulon entre ces deux plaques. Il ne s'agit donc pas d'un capteur de mesure d'un torseur, mais d'un moyen de mesure de la force appliquée par l'outil suivant une seule direction.

Le document EP-A-83 296 décrit l'utilisation de capteurs piézoélectriques à trois composantes de force dans une maquette d'avion servant à des tests en soufflerie. Il s'agit ici de grouper deux de ces capteurs placés en deux points différents pour obtenir une mesure complète des six composantes de force.

Le document FR-A-2529333 décrit un capteur de force à six composantes, les trois forces Fx, Fy et Fz et les trois couples Mx, My et Mz. On cherche à effectuer les mêmes mesures que dans l'invention, mais la structure proposée est totalement différente. En effet, le capteur décrit utilise un principe de tringlerie pour ne transmettre aux éléments sensibles que des efforts de traction et de compression dans des tringles.

Le document US-A-3582691 décrit un transducteur avec des capteurs de mesure multiple comprenant six cylindres piézoélectriques dont les axes de polarisation sont orientés suivant la même direction, en étant insérés et comprimés entre deux plateaux support, parfaitement plans et parallèles entre eux, et sur lesquels on vient appliquer une précontrainte. Il s'agit avant tout de décomposer une force principale appliquée sur l'un des plateaux en force individuelle.

Le document EP-A-0625410 décrit un micromanipulateur comprenant six poutres piézoélectriques reliées à deux support dans lequel toute précontrainte est exclue.

Le but de l'invention est de pallier les inconvénients de ces capteurs de mesure à jauges de contrainte tout en procurant d'autres avantages.

A cet effet, l'invention concerne un capteur de mesure d'un torseur de liaison entre deux pièces mécaniques, selon la revendication indépendante 1, et destiné à permettre la mesure d'un torseur de force complet avec trois composantes de force et trois composantes de moment, comprenant six cylindres pièzoélectriques, deux plateaux de support montés en vis-à-vis et respectivement en contact avec les deux faces d'extrémité de chaque cylindre piézo-électrique et des moyens pour fixer les six cylindres piézo-électriques entre les deux plateaux avec une précontrainte, chaque cylindre piéro-électrique mesurant une composante de force, caractérisé en ce que les axes géométriques des cylindres sont orientés suivant six directions différentes, et en ce que les deux plateaux présentent respectivement deux faces principales planes parallèles et en regard l'une de l'autre, en ce que six cavités sont ménagées à partir de chacune de ces deux faces principales, et en ce que les deux cavités émergeant au niveau de chacune des deux faces (la, 2a) et qui sont destinées à recevoir les extrémités du même cylindre piézo-électrique ont chacune une surface d'appui perpendiculaire à la direction suivant laquelle doit être aligné le cylindre piézo-électrique associé auxdites cavités.

Selon un mode de réalisation du capteur de mesure selon l'invention, les axes des six cylindres piézoélectriques sont orientés suivant une structure triaxiale à symétrie ternaire, et les six cylindres piézoélectriques sont régulièrement répartis au niveau de la périphérie des deux plateaux de support.

Selon une autre caractéristique du capteur selon l'invention, chaque cylindre piézo-électrique est traversé axialement par une vis formant un moyen de fixation du cylindre sur les deux plateaux, chaque vis formant également un élément de précontrainte du cylindre contre les deux faces principales des deux plateaux de support.

Pour permettre le montage des vis de fixation, deux passages axialement alignés sont percés respectivement dans les deux plateaux de support pour chaque vis, le passage recevant la tige filetée de la vis étant taraudé.

Avantageusement, une rondelle isolante est rapportée sur chacune des faces d'extrémité des cylindres piézoélectriques.

Le fait de concevoir un capteur fabriqué en plusieurs éléments, offre notamment les avantages de pouvoir concevoir des gammes différentes de capteurs et de faciliter le remplacement d'un élément défectueux.

En outre, l'utilisation d'éléments piézo-électriques comme moyens de mesure permet d'augmenter notablement la raideur du capteur, et le coefficient de surcharge peut atteindre 50 ou 100, voire plus, sans qu'il soit nécessaire de prévoir un mécanisme de protection par butée par exemple.

Ainsi, la grande raideur du capteur permet d'envisager des utilisations jusqu'à des fréquences inaccessibles à un capteur à jauges de contrainte, et le déplacement sous charge étant faible, la mesure des forces n'entraîne que peu de variations de position, ce qui peut être intéressant dans certaines applications, par exemple en usinage.

L'invention concerne également un procédé de fabrication du capteur, selon la revendication indépendante 7, procédé qui est caractérisé en ce qu'il consiste, à partir d'une pièce cylindrique de métal en acier ou en aluminium:

- à usiner dans la paroi externe de la pièce cylindrique, six cavités régulièrement reparties autour de la pièce cylindrique, chaque cavité délimitant deux surfaces d'appui planes, parallèles entre elles et perpendiculaires à la direction suivant laquelle doit être aligné un cylindre piézo-électrique,
- à percer dans la pièce cylindrique, six passages associés respectivement aux six cavités, chaque passage traversant la cavité associée étant percé suivant un axe perpendiculaire aux deux surfaces d'appui parallèles de ladite cavité,
- à découper la pièce cylindrique pour obtenir deux plateaux de support, le plan de coupe étant perpendiculaire à l'axe de la pièce cylindrique et passant au travers des cavités, chaque cavité étant ainsi scindée en deux parties,
- à mettre en vis-à-vis les deux plateaux de support, de manière à introduire entre les deux parties d'une même cavité un cylindre piézo-électrique, et
- à introduire une vis de fixation dans les deux passages axialement alignés et associés à une même cavité, chaque vis traversant axialement le cylindre piézo-électrique associé.

Un tel procédé de fabrication présente notamment l'avantage de pouvoir faciliter le montage des cylindres piézo-électriques sans créer des contraintes mécaniques lors de ce montage.

D'une manière générale, les applications d'un capteur selon l'invention touchent tous les domaines de l'industrie et on peut citer à titre d'exemple:

- la robotique industrielle (mesure d'effort de contact,...).
- la télé-opération de robot (retour sensitif d'effort, poignée de pilotage,...).
- les bancs d'essais de structures mécaniques (souffleries, bassins d'essais de carènes...),
- les machines outils (mesures d'efforts de coupe, de vibrations....),
- la biomécanique (mesure de performances sportives, rééducation...)
     et
- la balistique (mesure de forces de réaction, calcul d'une énergie d'impact d'un point d'impact, d'une direction de poussée...).

Les modes particuliers de réalisation de l'invention sont définis dans les revendications dépendantes 2-6 et 8.

D'autres avantages, caractéristiques et détails de l'invention ressortiront de la description explicative qui va suivre faite en référence aux dessins annexés, donnés uniquement à titre d'exemples et dans lesquels :

- la figure 1 est une vue en coupe schématique d'un capteur de mesure selon l'invention,
- la figure 2 est une vue en coupe suivant la ligne II-II de la figure 1,
- la figure 3 est une vue en perspective du principe général permettant de définir l'orientation des cylindres piézo-électriques du capteur, et
- les figures 4a à 4e illustrent schématiquement un procédé de fabrication d'un capteur selon l'invention.

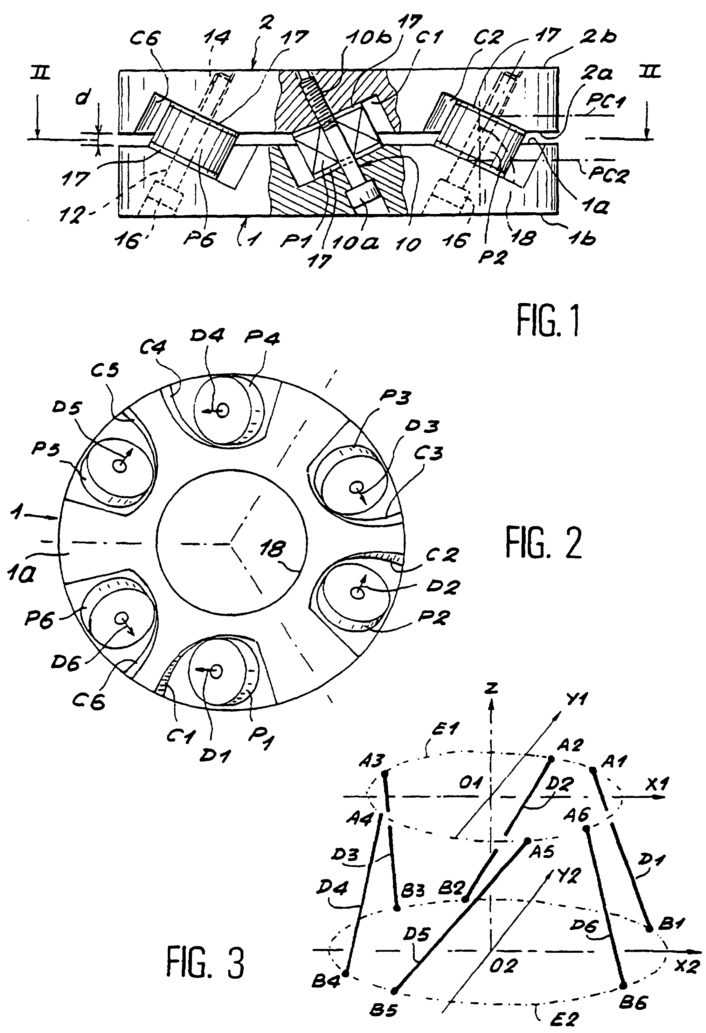

Un capteur de mesure selon l'invention et tel qu'illustré sur les figures 1 et 2, est constitué de plusieurs composants assemblés les uns aux autres, à savoir :

- deux plateaux métalliques de support 1 et 2, en acier ou en aluminium, disposés en vis-à-vis, et
- des dispositifs de mesure constitués par six cylindres piézo-électriques P1 à P6 interposés entre les deux plateaux 1 et 2.

Chaque plateau 1 et 2 est par exemple de forme circulaire et présente deux faces principales sensiblement planes et opposées la, 1b pour le plateau 1 et 2a, 2b pour le plateau 2.

Les deux plateaux 1 et 2 sont situés en vis-à-vis avec leurs faces principales la et 2a mutuellement en regard l'une de l'autre et séparées d'une distance d.

Les six cylindres piézo-électriques P1 à P6 sont interposés entre les deux faces 1a et 2a des deux plateaux 1 et 2, et leurs axes sont orientés suivant six directions D1 à D6 pour former une structure triaxiale de symétrie ternaire et indéformable, par exemple. Comme visible sur la figure 2, les six cylindres piézo-électriques P1 à P6 sont régulièrement répartis vers la périphérie des deux plateaux 1 et 2.

En se reportant à la figure 3, on a illustré en perspective un principe général permettant de définir les orientations D1 à D6 des axes des six cylindres piézo-électriques P1 à P6. Plus précisément, on a considéré les deux plans de coupe parallèles PC1 et PC2 (figure 1) qui passent respectivement par les centres des deux faces d'extrémité des cylindres piézo-électriques P1 à P6. Ces centres A1 à A6 pour le plan de coupe PC1 et B1 à B6 pour le plan de coupe PC2 sont respectivement sur deux cercles n'ayant pas nécessairement le même diamètre, ces deux cercles se matérialisant par deux ellipses E1 dans le plan X1-O1-Y1 et E2 dans le plan X2-O2-Y2 sur la perspective de la figure 3.

Concrètement, les six points A1 à A6 sont répartis sur un cercle suivant une symétrie ternaire, c'est-à-dire que l'on définit trois couples de points A1-A2, A3-A4 et A5-A6 répartis à 120° les uns des autres. D'une manière semblable, les six points B1 à B6 sont également répartis suivant une symétrie ternaire, et les six directions D1 à D6 sont respectivement définies par les six couples de points A1-B1 à A6-B6.

Le choix de la position des points A1 à A6 et B1 à B6 est effectué suivant les conditions d'utilisation du capteur et n'est donc pas nécessairement prédéterminé à l'avance.

Les deux faces d'extrémité de chaque cylindre P1 à P6 viennent respectivement au contact des faces 1a et 2a des plateaux 1 et 2. Pour pouvoir aligner les axes de ces cylindres P1 à P6 suivant les directions D1 à D6, six cavités C1 à C6 appropriées sont ménagées sur chacune des faces la et 2a des plateaux 1 et 2.

En considérant le cylindre piézo-électrique P6 par exemple, la cavité C6 du plateau 1 dans laquelle doit s'engager une extrémité du cylindre P6, présente une surface plane S1 qui est perpendiculaire à la direction D6 suivant laquelle doit être aligné le cylindre P6, et la cavité C6 du plateau 2 dans laquelle doit s'engager l'autre extrémité du cylindre P6, présente une surface plane 52 qui est également perpendiculaire à la direction D6 suivant laquelle doit être aligné le cylindre P6, ces deux surfaces S1 et S2 étant parallèles entre elles. Les cavités pour les autres cylindres P1 à P5 présentent les mêmes caractéristiques.

Des moyens de fixation sont prévus pour assembler les cylindres piézo-électriques P1 à P6 aux deux plateaux 1 et 2. Concrètement, il est prévu un moyen de fixation par cylindre, moyen qui est constitué par une vis 10 qui traverse axialement le cylindre.

A cet effet, le plateau comporte six passages 12 qui sont percés entre les deux faces principales 1a et 1b du plateau 1 suivant des axes parallèles aux six directions D1 à D6. Chaque passage 12, côté face principale la du plateau 1, débouche à la surface S1 d'une cavité associée et perpendiculairement à cette surface S1. De manière analogue. le plateau 2 comporte six passages 14 qui sont perces entre les deux faces principales 2a et 2b du plateau 2 suivant des axes parallèles aux six directions D1 a D6. Chaque passage 14, côté face principale 2a du plateau 2, débouche à la surface S2 d'une cavité associée et perpendiculairement à cette surface S2.

A la face principale 1b du plateau 1, on usine par exemple un lamage 16 autour de chaque passage 12 pour pouvoir y loger la tête 10a d'une vis 10, et le passage 14 du plateau 2 qui est axialement aligné avec le passage 14 est taraudé pour coopérer positivement avec la tige filetée 10b de la vis 10. Une rondelle isolante 17 est avantageusement rapportée sur chaque face d'extrémité des cylindres piézo-électriques P1 à P6. Les sorties électriques (non représentés) du capteur sont situées au niveau des cylindres piézo-électriques et reliées à des circuits de traitement pour effectuer les mesures des contraintes reçues par chaque cylindre piézo-électrique. La partie centrale de chaque plateau 1 et 2 peut être percée d'une ouverture centrale de dégagement 18. Cette ouverture 18, usinée par enlèvement de matière, permet d'alléger le capteur et peut être utilisée pour le passage de câbles par exemple. Enfin, un capot peut être rapporté sur le capteur en laissant toutefois dégagées les deux faces externes 1b et 2b des deux plateaux 1 et 2 pour pouvoir assurer leur fixation entre deux pièces mécaniques.

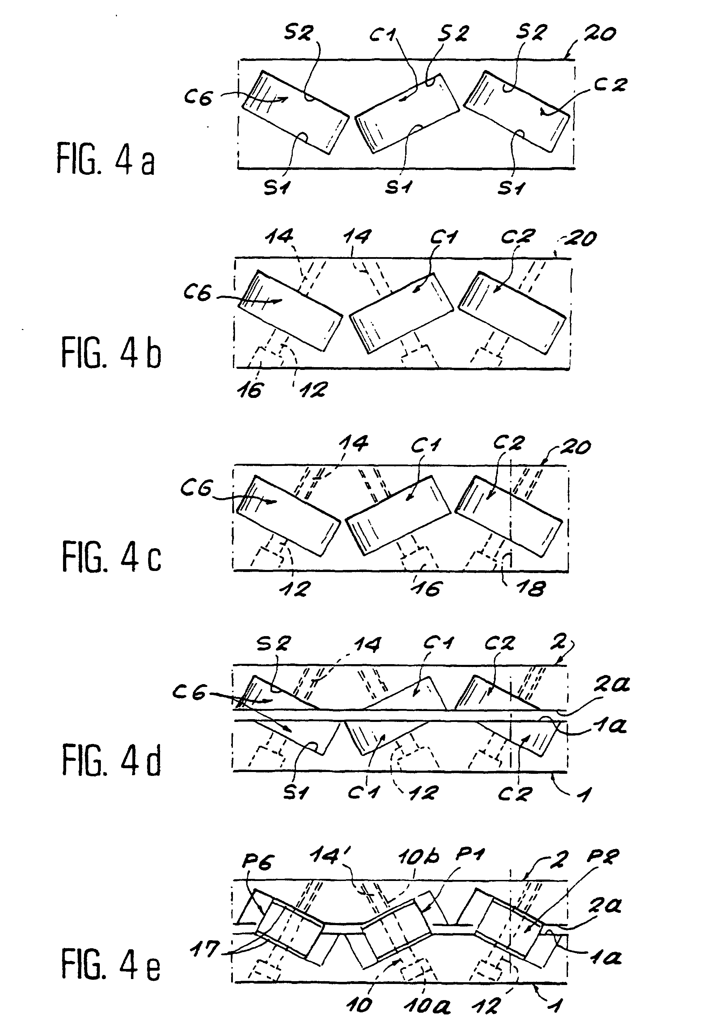

Pour faciliter le montage du capteur, notamment celui des cylindres piézo-électriques P1 à P6, l'invention prévoit également un procédé de fabrication qui consiste, à partir d'une pièce cylindrique de métal 20 en acier ou en aluminium, à effectuer les opérations décrites ci-après en référence aux figures 4a-4e..

Dans une première étape, illustrée à la figure 4a, le procédé consiste à usiner dans la paroi externe de la pièce cylindrique 20, six cavités C1 à C6 régulièrement réparties autour de la pièce cylindrique 20, chaque cavité délimitant deux surfaces d'appui planes S1 et S2, parallèles entre elles et perpendiculaires à la direction suivant laquelle doit être aligné un cylindre piézo-électrique associé à chaque cavité. La distance séparant les deux surfaces S1 et S2 correspond à l'épaisseur des cylindres piézo-électriques qui seront montés par la suite.

Dans une seconde étape illustrée à la figure 4b, on perce dans la pièce cylindrique 20 six passages associés respectivement aux six cavités C1-C6, chaque passage traversant la cavité associée en étant percé suivant un axe perpendiculaire aux deux surfaces Si et S2 de ladite cavité, de manière à délimiter les deux passages 12 et 14 axialement alignés et illustrés à la figure 1. Ensuite, on usine les lamages 16 autour des orifices des passages 12 qui débouchent à l'extérieur de la pièce cylindrique 20.

Dans une troisième étape illustrée à la figure 4c, on procède à des usinages complémentaires, notamment le perçage de l'ouverture centrale 18 et le taraudage des passages 14.

Dans une quatrième étape illustrée à la figure 4d, on procède au découpage de la pièce cylindrique 20 pour obtenir deux plateaux 10 et 12, le plan de coupe étant perpendiculaire à l'axe de la pièce cylindrique 20 et passant au travers des cavités C1-C6, chaque cavité étant ainsi scindée en deux parties.

Dans une dernière étape illustrée à la figure 4e, on procède au montage des cylindres piézo-électriques P1 et P6 dans les cavités C1 à C6 et à leur fixation au moyen des vis 10.

Selon un mode de fonctionnement du capteur précédemment décrit, les efforts transmis par exemple par le plateau 1 peuvent être représentés par un torseur T (t). Ce torseur crée notamment des contraintes de traction/compression au niveau des cylindres piézo-électriques P1-P6, et ces contraintes génèrent des charges électriques qui, après intégration, deviennent des tensions électriques.

Si on représente par V (t) le vecteur formé par les six tensions issues des cylindres piézo-électriques P1 à P6, tout torseur T engendre, dans la bande passante du capteur, une réponse linéaire du type :

$$V(t) = [M] \times T(t)$$

où [M] est la matrice de transfert (6 x 6), du capteur.

Connaissant V(t) qui est le vecteur des mesures fournies par le capteur, on calcule alors le torseur :

$$T(t) = [M]^{-1} \times V(t) = \begin{matrix} Tx(t) \\ Ty(t) \\ Tz(t) \\ Mx(t) \\ My(t) \\ Mz(t) \end{matrix}$$

où [M] doit être connu en étant calculé ou identifié.

Une façon de connaître [M] est de procéder par un moyen d'identification sur banc d'essai. Dans cette technique, on soumet le capteur à une série de torseurs connus T(t). On applique ensuite la méthode des moindres carrés généralisés pour déterminer la matrice [M]. Comme le nombre d'essais peut être très supérieur à l'ordre de la matrice recherchée, on utilise la méthode de la pseudo-inverse :

$$[M] = [V^T V]^{-1} V^T.T$$

Les trois premières composantes du torseur Tx(t), Ty(t), Tz(t) sont les trois composantes de force et Mx(t), My(t) et Mz(t) sont les trois composantes de moment, sachant que le repère de référence est celui dans laquelle la matrice [M] est exprimée.

## Revendications

**1.** Capteur de mesure d'un torseur de liaison'entre deux pièces mécaniques et destiné à permettre la mesure d'un torseur de force complet avec trois composantes de force et trois composantes de moment, comprenant six cylindres pièzoélectriques (P1 à P6), deux plateaux de support (1, 2) montés en vis-à-vis et respectivement en contact avec les deux faces d'extrémité de chaque cylindre piézo-électrique (P1 à P6) et des moyens (10) pour fixer les six cylindres piézo-électriques (P1 à P6) entre les deux plateaux avec une précontrainte, chaque cylindre piézo-électrique mesurant une composante de force, **caractérisé en ce que** les axes géométriques des six cylindres sont orientés suivant six directions différentes (D1 à D6), **en ce que** les deux plateaux (1, 2) présentent respectivement deux faces principales planes (la, 2a) parallèles et en regard l'une de l'autre, **en ce que** six cavités (C1 à C6) sont ménagées à partir de chacune de ces deux faces principales (1a, 2a), et **en ce que** les deux cavités émergeant au niveau de chacune des deux faces (1a, 2a) et qui sont destinées à recevoir les extrémités du même cylindre piézo-électrique ont chacune une surface d'appui (S1, S2) perpendiculaire à la direction suivant laquelle doit être aligné le cylindre piézo-électrique associé auxdites cavités.

2. Capteur de mesure selon la revendication 1, **caractérisé en ce que** les axes des six cylindres piézo-électriques (P1 à P6) sont orientés suivant une structure triaxiale à symétrie ternaire.

3. Capteur de mesure selon la revendication 1 ou 2, **caractérisé en ce que** les six cylindres piézo-électriques (P1 à P6) sont régulièrement répartis au niveau de la périphérie des deux plateaux (1, 2).

4. Capteur de mesure selon la revendication 3, caractérisé en que chaque cylindre piézo-électrique est traversé axialement par une vis (10) formant un moyen de fixation du cylindre piézo-électrique sur les deux plateaux (1, 2), chaque vis (10) formant également un élément de pré-contrainte du cylindre piézo-électrique contre les deux surfaces principales (1a, 2a) des deux plateaux (1, 2).

5. Capteur de mesure selon la revendication 4, **caractérisé en ce que** chaque vis de fixation (10) est engagée dans deux passages (12, 14) axialement alignés et respectivement percés dans les deux plateaux (1, 2).

6. Capteur de mesure selon la revendication 4 ou 5, **caractérisé en ce qu'**une rondelle isolante (17) est rapportée sur chaque face d'extrémité des cylindres piézo-électriques (P1 à P6).

7. Procédé de fabrication d'un capteur de mesure d'un torseur de liaison entre deux pièces mécaniques et destiné à permettre la mesure d'un torseur de force complet avec trois composantes de force et trois composantes de moment, mesure effectuée au moyen de six cylindres piézo-électriques, dont les axes sont orientés suivant six directions, **caractérisé en ce qu'**il consiste, à partir d'une pièce cylindrique de métal (20) en acier ou en aluminium:

   - à usiner dans la paroi externe de la pièce cylindrique (20) six cavités (C1 à C6) régulièrement réparties autour de la pièce cylindrique (20), chaque cavité délimitant deux surfaces d'appui planes (S1, S2) parallèles et perpendiculaires à la direction suivant laquelle doit être aligné un cylindre piézo-électrique,
   - à percer dans la pièce cylindrique (20), six passages associés respectivement aux six cavités (C1 à C6), chaque passage traversant la cavité associée et étant percé suivant un axe perpendiculaire aux deux surfaces d'appui (S1, S2) de ladite cavité,
   - à découper la pièce cylindrique (20) pour obtenir deux plateaux de support (1, 2), le plan de coupe étant perpendiculaire à l'axe de la pièce cylindrique (20) et passant au travers des cavités (C1 à C6), chaque cavité écant ainsi scindée en deux parties,
   - à mettre en vis-à-vis les deux plateaux (1, 2) de manière à pouvoir introduire entre les deux parties de chaque cavité, un cylindre piézo-électrique, dont les deux surfaces d'extrémité viennent respectivement en appui sur les deux surfaces (S1, S2), et
   - à introduire respectivement six vis de fixation (10) dans les six passages, chaque vis traversant axialement le cylindre piézo-électrique associé.

8. Procédé selon la revendication 7, **caractérisé en ce qu'**il consiste à orienter les axes des six cylindres piézo-électriques (P1 à P6) suivant une structure triaxiale à symétrie ternaire.


**Patentansprüche**

1. Sensor zur Messung eines Verbindungstorseurs zwischen zwei mechanischen Teilen, der dafür vorgesehen ist, die Messung eines kompletten Kraft-Torseurs mit drei Kraftkomponenten und drei Momentkomponenten zu ermöglichen, und der sechs piezo-elektrische Zylinder (P1 bis P6), zwei Tragscheiben (1, 2), die sich gegenüberliegend und jeweils in Kontakt mit den zwei Endflächen jedes piezo-elektrischen Zylinders (P1 bis P6) montiert sind, und Mittel (10) zum Befestigen der sechs piezo-elektrischen Zylinder (P1 bis P6) zwischen den zwei Scheiben mit einer mechanischen Vorspannung, wobei jeder piezo-elektrische Zylinder eine Kraftkomponente messt, umfasst, **dadurch gekennzeichnet, dass** die geometrischen Achsen der sechs Zylinder gemäß sechs unterschiedlichen Richtungen (D1 bis D6) ausgerichtet sind, dass die zwei Scheiben (1, 2) jeweils zwei glatte, parallele und einander gegenüberstehende Hauptflächen (1a, 2a) aufweisen, dass sechs Vertiefungen (C1 bis C6), von diesen beiden Hauptflächen (1a, 2a) ausgehend, vorgesehen sind und dass die zwei Vertiefungen, die im Bereich der beiden Flächen (1a, 2a) heraustreten und die dafür vorgesehen sind, dass die Enden des selben piezo-elektrischen Zylinders aufzunehmen, beide eine Auflagefläche (S1, S2) senkrecht zur Richtung, gemäß welcher der mit den genannten Vertiefungen verknüpfte piezo-elektrische Zylinder ausgerichtet sein muss, haben.

2. Messsensor nach Anspruch 1, **dadurch gekennzeichnet, dass** die Achsen der sechs piezo-elektrischen Zylinder (P1 bis P6) gemäß einer dreiaxialen Struktur mit dreifacher Symmetrie ausgerichtet sind.

3. Messsensor nach Anspruch 1 oder 2, **dadurch gekennzeichnet, dass** die sechs piezo-elektrischen Zylinder (P1 bis P6) im Bereich des Randes der zwei Scheiben (1, 2) gleichmäßig verteilt sind.

4. Messsensor nach Anspruch 3, **dadurch gekennzeichnet, dass** jeder piezo-elektrische Zylinder axial von einer Schraube (10) durchdrungen ist, welche ein Mittel zum Befestigen des piezo-elektrischen Zylinders an den zwei Scheiben (1, 2) bildet, wobei jede Schraube (10) auch ein Element zur mechanischen Vorspannung des piezo-elektrischen Zylinders gegen die zwei Hauptflächen (1a, 2a) der zwei Scheiben (1, 2) bildet.

5. Messsensor nach Anspruch 4, **dadurch gekennzeichnet, dass** jede Befestigungsschraube (10) in zwei Durchführungen (12, 14), die axial ausgerichtet und jeweils in die zwei Scheiben (1, 2) gebohrt sind, eingebracht ist.

6. Messsensor nach Anspruch 4 oder 5, **dadurch gekennzeichnet, dass** eine Isolierscheibe (17) auf jede Endfläche der piezo-elektrischen Zylinder (P1 bis P6) aufgesteckt ist.

7. Verfahren zur Herstellung eines Sensors zur Messung eines Verbindungstorseurs zwischen zwei mechanischen Teilen und der dafür vorgesehen ist, die Messung eines kompletten Kraft-Torseurs mit drei Kraftkomponenten und drei Momentkomponenten zu ermöglichen, wobei die Messung mit Hilfe von sechs piezo-elektrischen Zylindern erfolgt, deren Achsen gemäß sechs Richtungen orientiert sind, **dadurch gekennzeichnet, dass** es ausgehend von einem zylindrischen Metallteil (20) aus Stahl oder Aluminium die Schritte umfasst:

- maschinell in die äußere Wand des zylindrischen Teiles (20) sechs Vertiefungen (C1 bis C6), die gleichmäßig um das zylindrische Teil (20) herum verteilt sind, einzuarbeiten, wobei jede Vertiefung zwei glatte Auflageflächen (S1, S2) abgrenzt, die parallel und senkrecht zur Richtung sind, gemäß welcher ein piezo-elektrischer Zylinder ausgerichtet sein muss,
- in das zylindrische Teil (20) sechs Durchführungen zu bohren, die jeweils mit den sechs Vertiefungen (C1 bis C6) verknüpft sind, wobei jede Durchführung die verknüpfte Vertiefung durchdringt und gemäß einer Achse senkrecht zu den zwei Auflageflächen (S1, S2) der genannten Vertiefung gebohrt werden,
- das zylindrische Teil (20) zu zerspalten, um zwei Tragscheiben (1, 2) zu erhalten, wobei die Spaltebene senkrecht zur Achse des zylindrischen Teiles (20) liegt und durch die Vertiefungen (C1 bis C6) verläuft, wobei jede Vertiefung so in zwei Abschnitte zerteilt wird,
- die zwei Scheiben (1, 2) so sich gegenüber stehend anzuordnen, um zwischen den zwei Abschnitten jeder Vertiefung einen piezo-elektrischen Zylinder einführen zu können, wobei somit die zwei Endflächen jeweils an den zwei Flächen (S1, S2) zur Anlage kommen, und
- jeweils sechs Befestigungsschrauben (10) in die sechs Durchführungen einzuführen, wobei jede Schraube den verknüpften piezo-elektrischen Zylinder axial durchdringt.

8. Verfahren nach Anspruch 7, **dadurch gekennzeichnet, dass** es weiter umfasst, die Achsen der sechs piezo-elektrischen Zylinder (P1 bis P6) gemäß einer dreiaxialen Struktur mit dreifacher Symmetrie auszurichten.

**Claims**

1. A measurement sensor for a linking wrench between two mechanical parts and intended to enable a full force wrench with three force components and three moment components to be measured, comprising six piezoelectric cylinders (P1 to P6), two support plates (1, 2) mounted facing one another and respectively in contact with the two end faces of each piezoelectric cylinder (P1 to P6), and means (10) to fasten the six piezoelectric cylinders (P1 to P6) between the two plates (1, 2)each piezoelectric cylinder being intended to measure a force component, **characterised in that** the axes of the six piezoelectric cylinders (P1 to P6) are directed according to six different directions (D1 to D6), **in that** the two support plates (1, 2) respectively have two plane main faces (1a, 2a) parallel and facing one another, and **in that** six cavities (C1 to C6) are arranged on each of the main faces (1a, 2a), and **in that** the two cavities from each of these faces (1a, 2a) which are intended to accommodate the ends of a piezoelectric cylinder each having a bearing surface (S1, S2) which is perpendicular to the direction along which the piezoelectric cylinder associated with said cavities is to be aligned.

2. A measurement sensor according to Claim 1, **characterised in that** the axis of the six piezoelectric cylinders (P1 to P6) are oriented according a triaxial structure of ternary symmetry.

3. A measurement sensor according to Claim 1 or 2, **characterised in that** the six piezoelectric cylinders (P1 to P6) are evenly spaced towards the periphery of the two support plates (1, 2).

4. A measurement sensor according to Claim 3, **characterised in that** each piezoelectric cylinder is axially pierced by a screw (10) forming a means to fasten the cylinder onto the two plates, each screw also forming a prestressing element of the piezoelectric cylinder against the two main faces of the two support plates (1, 2), each screw (10) also forming a prestressing element of the piezoelectric cylinder against the two main faces (1a, 2a) of the two plates (1, 2).

5. A measurement sensor according to Claim 4, **characterised in that** each fastening screw (10) is engaged in two passages (12, 14) which are axially aligned and drilled in the two plates (1, 2)

6. A measurement sensor according to Claim 4, **characterised in that** an insulating washer (17) is brought around each of the end faces of the piezoelectric cylinders (P1 to P6).

7. A manufacturing process for measurement sensor for a linking wrench between two mechanical parts and intended to enable a full force wrench with three force components and three moment components to be measured, the measurement being carried out by means of six piezoelectric cylinders, whose axes are directed along six directions, **characterised in that** it consists, from the basis of a cylindrical part (20) made of steel or aluminium, in :

   - machining in the outer wall of the cylindrical part (20) six cavities (C1 to C6) evenly spaced around the cylindrical part (20), each cavity marking out two plane bearing surfaces (S1, S2), parallel to each other and perpendicular to the direction along which a piezoelectric cylinder is to be aligned,

   -- drilling in the cylindrical part (20) six passages respectively associated with the six cavities (C1 to C6), each passage passing through the associated cavity being drilled along a perpendicular axis to the two bearing surfaces (S1, S2) parallel to said cavity,

   - cutting the cylindrical part (20) to obtain two support plates (1, 2), the cutting plane being perpendicular to the axis of the cylindrical part and passing through the cavities (C1 to C6), each cavity being thus sectioned into two parts,
   - setting the two support plates (1, 2) to face each other, so as to introduce a piezoelectric cylinder whose end faces respectively press on the two surfaces (S1, S2), and
   - introducing respectively six fastening screws (10) into the six passages, each screw axially piercing the associated piezoelectric cylinder.

8. A process according to Claim 7, **characterised in that** it consists in directing the six piezoelectric cylinders (P1 to P6) in a triaxial structure of ternary symmetry.

FIG. 1

FIG. 2

FIG. 3

FIG. 4 a

FIG. 4 b

FIG. 4 c

FIG. 4 d

FIG. 4 e